# EUROPEAN PATENT APPLICATION

(11) **EP 4 451 358 A1**
(43) Date of publication of application: **23.10.2024**
(21) Application number: 24163004.5
(22) Date of filing: 12.03.2024
(51) Int. Cl.: H01M 4/04, H01M 4/134, H01M 4/1395, H01M 4/38, H01M 4/62, H01M 10/0525, H01M 10/0562, H01M 4/02

(54) **ELECTRODE ACTIVE MATERIAL COMPOSITE PARTICLE, SOLID STATE BATTERY, METHOD FOR MANUFACTURING ELECTRODE ACTIVE MATERIAL COMPOSITE PARTICLE, AND METHOD FOR MANUFACTURING A SOLID STATE BATTERY**

(30) Priority: 18.04.2023 JP 2023067830
(71) Applicant: TOYOTA JIDOSHA KABUSHIKI KAISHA, Toyota-shi, Aichi-ken, 471-8571 (JP)
(72) Inventor: Uchiyama, Takayuki, Aichi-ken, 471-8571 (JP); Nakanishi, Shinji, Aichi-ken, 471-8571 (JP); Furuya, Ryosuke, Aichi-ken, 471-8571 (JP)
(74) Representative: D Young & Co LLP

(57) **Abstract**

The present disclosure has an object of providing an electrode active material composite particle having a small expansion due to charging, a solid-state battery comprising such an electrode active material composite particle, a method for manufacturing such an electrode active material composite particle, and a method for manufacturing a solid-state battery comprising manufacturing such an electrode active material composite particle. The electrode active material composite particle of the present disclosure comprises a silicon particle and a fibrous conductive material. In the electrode active material composite particle of the present disclosure, the fibrous conductive material is localized inside the electrode active material composite particle.

## Description

### FIELD

The present disclosure relates to an electrode active material composite particle, a solid-state battery, a method for manufacturing an electrode active material composite particle, and a method for manufacturing a solid-state battery.

### BACKGROUND

In recent years, there has been ongoing development of batteries. For example, in the automotive industry, the developments of batteries for use in electric vehicles or hybrid vehicles and active material for use in batteries have been advancing.

For example, PTL 1 discloses a negative electrode active material used in batteries, wherein the negative electrode active material is a nonwoven fabric-like particle containing silicon fiber, an average particle size (D50) of the negative electrode active material is 0.2 µm or more and 3.6 µm or less, and the negative electrode active material is amorphous.

### [CITATION LIST]

### [PATENT LITERATURE]

[PTL 1] Japanese Unexamined Patent Publication (Kokai) No. 2021-022554

### SUMMARY

### [TECHNICAL PROBLEM]

There is a demand for negative electrode active materials having a small expansion amount due to charging.

The present disclosure has an object of providing an electrode active material composite particle having a small expansion due to charging, a solid-state battery comprising such an electrode active material composite particle, a method for manufacturing such an electrode active material composite particle, and a method for manufacturing a solid-state battery comprising manufacturing such an electrode active material composite particle.

### [SOLUTION TO PROBLEM]

The present inventors have discovered that the above object can be achieved by the following means.

### <Aspect 1>

An electrode active material composite particle, comprising a silicon particle and a fibrous conductive material, wherein
the fibrous conductive material is localized inside the electrode active material composite particle.

### <Aspect 2>

The electrode active material composite particle according to Aspect 1, wherein a fiber diameter of the fibrous conductive material is 1000 nm or less.

### <Aspect 3>

The electrode active material composite particle according to Aspect 1 or 2, wherein the fibrous conductive material is fibrous carbon.

### <Aspect 4>

The electrode active material composite particle according to any one of Aspects 1 to 3, further comprising a binder.

### <Aspect 5>

A solid-state battery, comprising an electrode active material layer, wherein
the electrode active material layer contains the electrode active material composite particle according to any one of Aspects 1 to 4.

### <Aspect 6>

A method for manufacturing an electrode active material composite particle, comprising spray-drying a slurry comprising silicon particles and a fibrous conductive material.

### <Aspect 7>

The method according to Aspect 6, wherein a fiber diameter of the fibrous conductive material is 1000 nm or less.

### <Aspect 8>

The method according to Aspect 6 or 7, wherein the fibrous conductive material is fibrous carbon.

### <Aspect 9>

The method according to any one of Aspects 6 to 8, wherein the slurry further comprises a binder.

### <Aspect 10>

A method for manufacturing a solid-state battery, comprising
manufacturing electrode active material composite particles by the method according to any one of Aspects 6 to 9, and
forming an electrode active material layer containing the electrode active material composite particles.

### [ADVANTAGEOUS EFFECTS OF INVENTION]

According to the present disclosure, an electrode active material composite particle having a small expansion due to charging, a solid-state battery comprising such an electrode active material composite particle, a method for manufacturing such an electrode active material composite particle, and a method for manufacturing a solid-state battery comprising manufacturing such an electrode active material composite particle can be provided.

### BRIEF DESCRIPTION OF DRAWINGS

FIG. 1 is a SEM image of the electrode active material composite particle according to Reference Example.
FIG. 2 is a SEM-EDX image showing a cross-sectional structure of the electrode active material composite particle according to Reference Example, measured using the Ckα line.
FIG. 3 is a SEM-EDX image showing a cross-sectional structure of the electrode active material composite particle according to Reference Example, measured using the Sikα line.
FIG. 4 is a SEM image showing a cross-sectional structure of the electrode active material composite particle according to Example 1.
FIG. 5 is a SEM-EDX image showing a cross-sectional structure of the electrode active material composite particle according to Example 1, measured using the Ckα line.
FIG. 6 is a SEM-EDX image showing a cross-sectional structure of the electrode active material composite particle according to Example 1, measured using the Sikα line.
FIG. 7 is a SEM image of the electrode active material composite particle according to Example 2.
FIG. 8 is a SEM-EDX image of a cross-sectional structure of the electrode active material composite particle according to Example 2, measured using the Ckα line.
FIG. 9 is a SEM-EDX image of a cross-sectional structure of the electrode active material composite particle according to Example 2, measured using the Sikα line.

### DESCRIPTION OF EMBODIMENTS

Hereinafter, embodiments of the present disclosure will be described in detail. Note that the present disclosure is not limited to the following embodiments, and various modifications can be made thereto within the scope of the disclosure.

### «Electrode active material composite particle»

The electrode active material composite particle of the present disclosure comprises a silicon particle and a fibrous conductive material. In the electrode active material composite particle of the present disclosure, the fibrous conductive material is localized inside the electrode active material composite particle.

In order to suppress expansion of an active material due to charging in solid-state batteries, a technique using porous silicon particles is known. This technique is based on the assumption that voids inside the porous silicon particles absorb the expansion of the silicon particles and thus the expansion can be suppressed.

The present inventors have discovered that there are cases in which expansion of silicon particles cannot be sufficiently suppressed by using porous silicon particles. Without intending to be bound by any theory, the reason therefor is presumed as follows. Specifically, when a solid-state battery is manufactured, pressing of an active material layer comprising porous silicon is required for densification. It is considered at that time that voids inside the porous silicon particles are partially crushed, and as a result, sufficient voids to absorb the expansion cannot be ensured and the expansion may not be sufficiently suppressed.

In contrast, it is considered that in the electrode active material composite particle of the present disclosure, a fibrous conductive material functions as pillars, enabling voids inside the electrode active material composite particle to be maintained and thereby suppressing expansion of the electrode active material composite particle during charging.

It is considered that since the electrode active material composite particle of the present disclosure can provide high conductivity by the fibrous conductive material, the active material layer uniformly expands, thereby suppressing the expansion of the active material layer as a whole.

Regarding the present disclosure, an "electrode" may be a positive electrode or a negative electrode, and is particularly preferably a negative electrode.

### <Silicon particles>

The electrode active material composite particle comprises a silicon particle.

The composition of the silicon particle is not particularly limited. The ratio of silicon element to all the elements contained in the silicon particle, for example, may be 50 mol% or greater, 70 mol% or greater, or 90 mol% or greater.

The silicon particle may comprise additional elements such as Li element, in addition to Si element. Examples of the additional elements other than Li element include Sn element, Fe element, Co element, Ni element, Ti element, Cr element, B element, and P element.

The silicon particle may comprise impurities such as an oxide.

The silicon particle may be amorphous or crystalline. The crystal phase contained in the silicon particle is not particularly limited.

The shape and size of the silicon particle are not particularly limited. The average particle size of the silicon particles, for example, may be 30 nm or more, 50 nm or more, 100 nm or more, or 150 nm or more, and may be 10 µm or less, 5 µm or less, 3 µm or less, 2 µm or less, or 1 µm or less. The average particle size can be determined by observation with an electron microscope such as SEM and is determined, for example, as an average value of maximum Feret diameters of a plurality of particles. The number of samples is preferably large, for example, 20 or more, and may be 50 or more or 100 or more. The average particle size can be appropriately adjusted, for example, by appropriately changing the manufacturing conditions of the silicon particle described below or by carrying out a classification treatment.

The silicon particle contained in the electrode active material composite particle may be a porous silicon particle. The porous silicon particle comprises silicon having a plurality of voids. The form of the voids in the porous silicon particle is not particularly limited.

The porous silicon particle may be a particle comprising nanoporous silicon. Nanoporous silicon refers to silicon in which a plurality of pores having a pore size in the order of nanometers (less than 1000 nm, preferably 100 nm or less) are present.

The porous silicon particle may comprise pores having a diameter of 55 nm or less. Pores having a diameter of 55 nm or less are not easily crushed even by pressing. In other words, a porous silicon particle including pores having a diameter of 55 nm or less easily maintains a porous quality even after pressing. For example, pores having a diameter of 55 nm or less per g of porous silicon particles may be contained in 0.21 cc/g or more, 0.22 cc/g or more, or 0.23 cc/g or more, and may be contained in 0.30 cc/g or less, 0.28 cc/g or less, or 0.26 cc/g or less. The amount of pores having a diameter of 55 nm or less contained in the porous silicon particle can be determined from a pore size distribution, for example, by a nitrogen gas adsorption method or DFT method.

The porous silicon particle may have a predetermined porosity. The porosity of the porous silicon particle, for example, may be 1% or greater, 5% or greater, 10% or greater, or 20% or greater, and may be 80% or less, 70% or less, 60% or less, 50% or less, 40% or less, or 30% or less. The porosity of the silicon particle can be determined, for example, by observation with a scanning electron microscope (SEM). The number of samples is preferably large, for example, 100 or more. The porosity can be an average value determined from these samples.

### <Fibrous conductive material>

The electrode active material composite particle of the present disclosure comprises a fibrous conductive material. The fibrous conductive material is localized inside the electrode active material composite particle.

The fiber diameter of the fibrous conductive material is preferably 1000 nm or less. When the fiber diameter of the fibrous conductive material is within the above range, sufficient voids can be retained inside the electrode active material composite particle and the fibrous conductive material is deformable, whereby expansion due to charging is further decreased. The fiber diameter may be 1 nm or more, 3 nm or more, 5 nm or more, or 10 nm or more, and may be 750 nm or less, 500 nm or less, 300 nm or less, 200 nm or less, or 150 nm or less.

The fibrous conductive material is not particularly limited, and is exemplified by fibrous carbon and metal fiber. The fibrous carbon is exemplified by carbon nanotube (CNT) and vapor-grown carbon fiber (VGCF). Metals constituting the metal fiber are exemplified by nickel, aluminum, copper, iron, and stainless steel. The fibrous conductive material is preferably fibrous carbon, more preferably carbon nanotube or vapor-grown carbon fiber, even more preferably carbon nanotube. The fibrous conductive material may be of one type used alone, or may be of two or more types used in combination.

In the present disclosure, the fibrous conductive material is localized inside the electrode active material composite particle. Localization of the fibrous conductive material inside the electrode active material composite particle can be confirmed by observing a cross-sectional structure, for example, by a scanning electron microscope-energy dispersive X-ray spectroscopy (SEM-EDX) method.

### <Binder>

The electrode active material composite particle of the present disclosure may further comprise a binder. The binder joins a plurality of silicon particles together. The type of binder is not particularly limited, and may be selected, for example, from butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, polyimide (PI)-based binders, carboxymethylbatteryulose (CMC)-based binders, polyacrylate-based binders, and polyacrylic acid ester-based binders. Particularly, PVdF-based binders have high performance. The PVdF-based binder may be a copolymer comprising single units derived from a monomer other than VdF. The binder may be of one type used alone, or may be of two or more types used in combination.

The mass ratios (silicon particles to fibrous conductive material to binder) of the silicon particles, the fibrous conductive material, and the binder contained in the electrode active material composite particle are not particularly limited as long as an electrode active material composite particle can be formed. The ratio of silicon particles : fibrous conductive material: binder may be, for example, 100:5 to 15:0.1 to 10.

The average particle size of the electrode active material composite particles is not particularly limited. The average particle size of the electrode active material composite particles may be 100 nm or more, 1 µm or more, 2 µm or more, or 3 µm or more, and may be 20 µm or less, 15 µm or less, or 10 µm or less. The average particle size of the electrode active material composite particles can be determined by observation with an electron microscope such as SEM, and is determined, for example, as an average value of maximum Feret diameters of a plurality of electrode active material composite particles. The number of samples is preferably large, for example, 20 or more, and may be 50 or more or 100 or more. Alternatively, the average particle size (D50, median diameter) obtained by extracting only electrode active material composite particles and measuring the electrode active material composite particles using a laser diffraction particle distribution analyzer may be 100 nm or more, 1 µm or more, 2 µm or more, or 3 µm or more, and may be 20 µm or less, 15 µm or less, or 10 µm or less.

### «Method for manufacturing electrode active material composite particle»

The method of the present disclosure for manufacturing an electrode active material composite particle comprises spray-drying a slurry comprising silicon particles and a fibrous conductive material.

The above descriptions relating to the electrode active material composite particle of the present disclosure can be referenced regarding the silicon particles and the fibrous conductive material.

The slurry may further comprise a binder. The above descriptions relating to the electrode active material composite particle of the present disclosure can be referenced regarding the binder.

As the method of spray drying, a conventional method can be adopted.

Examples thereof include a method of spraying a slurry into a spray dryer having an inert gas of 100°C to 180°C introduced therein to dry.

The temperature in this case may be 110°C or higher, 120°C or higher, or 130°C or higher, and may be 170°C or lower, 160°C or lower, or 150°C or lower.

The inert gas is exemplified by nitrogen and argon, but is not limited thereto.

### «Solid-state battery»

The solid-state battery of the present disclosure comprises an electrode active material layer. The electrode active material layer contains the electrode active material composite particles of the present disclosure. Particularly, the solid-state battery of the present disclosure preferably comprises the electrode active material composite particles as a negative electrode active material, and in this case, may comprise a negative electrode current collector layer, a negative electrode active material layer containing the electrode active material composite particles of the present disclosure, a solid electrolyte layer, a positive electrode active material layer, and a positive electrode current collector layer in this order. A solid-state battery refers to a battery in which an electrolyte having carrier ion-conducting properties is mainly composed of a solid electrolyte. However, a liquid component may be contained at an additive level. Alternatively, the solid-state battery may be an all-solid-state battery substantially free of a liquid component.

### <Negative electrode current collector layer>

Any general negative electrode current collector for solid-state batteries can be adopted as the negative electrode current collector.

The negative electrode current collector may be foil-like, plate-like, mesh-like, punched metal-like, or a foam. The negative electrode current collector may be a metal foil or a metal mesh, and alternatively, may be a carbon sheet. Particularly, a metal foil has excellent handleability. The negative electrode current collector may consist of a plurality of foils or sheets.

Examples of metals constituting the negative electrode current collector include copper, nickel, chromium, gold, platinum, silver, aluminum, iron, titanium, zinc, cobalt, and stainless steel. Particularly, from the viewpoint of ensuring reduction resistance and the viewpoint of making alloying with lithium difficult, the negative electrode current collector may comprise at least one metal selected from copper, nickel, and stainless steel.

The negative electrode current collector may have on the surface thereof some coating layer for the purpose of adjusting resistance. The negative electrode current collector may be a metal foil or a substrate plated or vapor-deposited with a metal described above. When the negative electrode current collector consists of a plurality of metal foils, there may be some layer between the plurality of metal foils.

The thickness of the negative electrode current collector is not particularly limited, and for example, may be 0.1 µm or more or 1 µm or more, and may be 1 mm or less or 100 µm or less.

### <Negative electrode active material layer>

The negative electrode active material layer comprises at least electrode active material composite particles as a negative electrode active material, and may further optionally comprise a negative electrode active material other than the electrode active material composite particles, a solid electrolyte, a conductive aid, and a binder. The negative electrode active material layer may additionally comprise various additives.

### (Negative electrode active material)

The negative electrode active material layer comprises electrode active material composite particles as a negative electrode active material. The above descriptions relating to the electrode active material composite particle of the present disclosure can be referenced regarding the electrode active material composite particles.

The negative electrode active material layer may comprise a negative electrode active material in addition to the electrode active material composite particles. In this case, the ratio of the electrode active material composite particles in the entire negative electrode active material, for example, may be 50% by weight or greater, 70% by weight or greater, or 90% by weight or greater.

The ratio of the negative electrode active material in the negative electrode active material layer, for example, may be 20% by weight or greater, 30% by weight or greater, or 40% by weight or greater, and may be 80% by weight or less, 70% by weight or less, or 60% by weight or less.

### (Solid electrolyte)

Examples of the solid electrolyte typically include inorganic solid electrolytes such as sulfide solid electrolytes, oxide solid electrolytes, nitride solid electrolytes, and halide solid electrolytes; and organic polyelectrolytes such as polymer electrolytes.

Examples of the sulfide solid electrolytes having lithium ion-conducting properties include solid electrolytes containing Li element, X element (X is at least one of P, As, Sb, Si, Ge, Sn, B, Al, Ga, and In), and S element. The sulfide solid electrolyte may further contain at least one of O element and halogen elements. Examples of the halogen elements include F element, Cl element, Br element, and I element.

Examples of the sulfide solid electrolytes include Li₂S-P₂S₅, Li₂S-P₂S₅-LiI, Li₂S-P₂S₅-GeS₂, Li₂S-P₂S₅-Li₂O, Li₂S-P₂S₅-Li₂0-LiI, Li₂S-P₂S₅-LiI-LiBr, Li₂S-SiS₂, Li₂S-SiS₂-LiI, Li₂S-SiS2-LiBr, Li₂S-SiS2-LiCl, Li₂S-SiS2-B₂S3-LiI, Li₂S-SiS2-P₂S5-LiI, Li₂S-B₂S3, Li₂S-P₂S₅-ZmSn (where m and n are positive numbers, and Z is any of Ge, Zn, and Ga), Li₂S-GeS₂, Li₂S-SiS₂-Li₃PO4, and Li₂S-SiS2-LiₓMO_{y} (where x and y are positive numbers, and M is any of P, Si, Ge, B, Al, Ga, and In).

Examples of the oxide solid electrolytes having lithium ion-conducting properties include solid electrolytes containing Li element, Y element (Y is at least one of Nb, B, Al, Si, P, Ti, Zr, Mo, W, and S), and O element. Specific examples thereof include garnet-type solid electrolytes such as Li₇La₃Zr₂O₁₂, Li₇₋ₓLa₃(Zr₂₋ₓNbₓ)O₁₂ (0 ≤ x ≤ 2), and Li₅La₃Nb₂O₁₂; perovskite-type solid electrolytes such as (Li, La)TiO3, (Li, La)NbO₃, and (Li, Sr)(Ta, Zr)O₃; NASICON-type solid electrolytes such as Li(Al, Ti)(PO₄)₃ and Li(Al, Ga)(PO₄)₃; Li-P-O-based solid electrolytes such as Li₃PO₄ and LiPON (compounds in which a portion of O in Li₃PO₄ is substituted with N); and Li-B-O-based solid electrolytes such as Li₃BO₃ and compounds in which a portion of O in Li₃BO₃ is substituted with C.

The ratio of the solid electrolyte in the negative electrode active material layer may be 1% by weight or greater, 10% by weight or greater, or 20% by weight or greater, and may be 60% by weight or less or 50% by weight or less.

### (Conductive aid)

Examples of the conductive aid include carbon materials and metal particles. Specific examples of the carbon materials include particulate carbon materials such as acetylene black (AB) and ketjen black (KB); and fibrous carbon materials such as carbon fiber, carbon nanotube (CNT), and carbon nanofiber (CNF). Examples of the metal particles can include those of nickel, copper, iron, and stainless steel. The ratio of the conductive aid in the negative electrode active material layer may be 1% by weight or greater or 5% by weight or greater, and may be 30% by weight or less or 20% by weight or less.

### (Binder)

Examples of the binder include rubber-based binders such as butadiene rubber, hydrogenated butadiene rubber, styrene-butadiene rubber (SBR), hydrogenated styrene-butadiene rubber, nitrile-butadiene rubber, hydrogenated nitrile-butadiene rubber, and ethylene-propylene rubber; fluoride-based binders such as polyvinylidene fluoride (PVDF), polyvinylidene fluoride-polyhexafluoropropylene copolymer (PVDF-HFP), polytetrafluoroethylene, and fluororubber; polyolefin-based thermoplastic resins such as polyethylene, polypropylene, and polystyrene; imide-based resins such as polyimide and polyamide-imide; acrylic resins such as polymethyl acrylate and polyethyl acrylate; and methacrylic resins such as polymethyl methacrylate and polyethyl methacrylate. The ratio of the binder in the negative electrode active material layer is, for example, 1% by weight or greater and 30% by weight or less.

The thickness of the negative electrode active material layer is, for example, 0.1 µm or more and 1000 µm or less.

### <Solid electrolyte layer>

The solid electrolyte layer comprises at least a solid electrolyte, and may further optionally comprise a binder.

The above descriptions relating to the negative electrode active material layer of the present disclosure can be referenced regarding the solid electrolyte and the binder.

The thickness of the solid electrolyte layer is, for example, 0.1 µm or more and 1000 µm or less.

### <Positive electrode active material layer>

The positive electrode active material layer comprises at least a positive electrode active material, and may further optionally comprise a solid electrolyte, a conductive aid, and a binder.

Examples of the positive electrode active material include oxide active materials. Examples of the oxide active materials used in lithium-ion batteries include oxide active materials such as LiCoO₂, LiMnO₂, Li₂NiMn₃O₈, LiVO₂, LiCrO₂, LiFePO₄, LiCoPO₄, LiNiO₂, and LiNi_{1/3}Co_{1/3}Mn_{1/3}O₂. A coating layer containing an Li ion-conducting oxide such as LiNbO₃ may be formed on the surfaces of these active materials.

The ratio of the positive electrode active material in the positive electrode active material layer may be 20% by weight or greater, 30% by weight or greater, or 40% by weight or greater, and may be 80% by weight or less, 70% by weight or less, or 60% by weight or less.

The thickness of the positive electrode active material layer is, for example, 0.1 µm or more and 1000 µm or less.

### <Positive electrode current collector layer>

Any general positive electrode current collector for solid-state batteries can be adopted as the positive electrode current collector. The positive electrode current collector may be foil-like, plate-like, mesh-like, punched metal-like, or a foam. The positive electrode current collector may be composed of a metal foil or a metal mesh. Particularly, a metal foil has excellent handleability. The positive electrode current collector may consist of a plurality of foils.

Examples of metals constituting the positive electrode current collector include copper, nickel, chromium, gold, platinum, silver, aluminum, iron, titanium, zinc, cobalt, and stainless steel. Particularly, from the viewpoint of ensuring oxidation resistance, the positive electrode active material may comprise aluminum.

The positive electrode current collector may have on the surface thereof some coating layer for the purpose of adjusting resistance. The positive electrode active material may be a metal foil or a substrate plated or vapor-deposited with a metal described above. When the positive electrode current collector consists of a plurality of metal foils, there may be some layer between the plurality of metal foils.

The thickness of the positive electrode current collector is not particularly limited, and for example, may be 0.1 µm or more or 1 µm or more, and may be 1 mm or less or 100 µm or less.

### <Additional configurations>

In the solid-state battery, each of the above components may be housed inside an outer packaging. Any known outer packaging for batteries can be adopted as the outer packaging. In addition, a plurality of solid-state batteries may be optionally electrically connected and optionally stacked to form a battery pack. In this case, the battery pack may be housed inside a known battery case. The solid-state battery may be additionally provided with obvious components such as the necessary terminals. Examples of the shape of the solid-state battery can include a coin, a laminate, a cylinder, and a rectangle.

### <<Method for manufacturing solid-state battery>>

The method of the present disclosure for manufacturing a solid-state battery comprises manufacturing the electrode active material composite particle of the present disclosure and forming a negative electrode active material layer containing the electrode active material composite particles.

The above descriptions relating to the method for manufacturing the electrode active material composite particle of the present disclosure can be referenced regarding the method of manufacturing the electrode active material composite particle of the present disclosure.

As the method of forming a negative electrode active material layer containing the electrode active material composite particle, a method of mixing constituent materials such as the electrode active material composite particles to obtain a negative electrode mixture and powder-compacting the obtained negative electrode mixture is exemplified.

The method of the present disclosure for manufacturing a solid-state battery may further comprise laminating a negative electrode current collector, a negative electrode active material layer, a solid electrolyte layer, a positive electrode active material layer, and a positive electrode current collector in this order. The laminated body may be further press-molded. Additional members such as terminals are attached to the laminated body as needed. A solid-state battery is obtained by housing and sealing the laminated body in a battery case.

### EXAMPLES

### <Preparation of nanoporous silicon particles>

0.65 g of silicon (Si) particles (particle size of 0.5 µm, manufactured by Japan Pure Chemical Co., Ltd.) and 0.60 g of metallic lithium (Li) (manufactured by Honjo Metal Co., Ltd.) were mixed in an agate mortar under an argon (Ar) atmosphere to obtain a lithium-silicon (LiSi) precursor. In a glass reactor under an Ar atmosphere, 1.0 g of the obtained LiSi precursor and 125 ml of 1,3,5-trimethylbenzene (manufactured by Nacalai Tesque, Inc.) as a dispersion medium were mixed using an ultrasonic homogenizer (UH-50, manufactured by SMT Co., Ltd.). The obtained LiSi precursor dispersion liquid was cooled to 0°C, and 125 ml of ethanol (manufactured by Nacalai Tesque, Inc.) was added dropwise thereto to carry out a reaction for 120 min. After the reaction, 50 ml of acetic acid (manufactured by Nacalai Tesque, Inc.) was further added dropwise to the obtained product to carry out a reaction for 60 min. After the reaction, liquid and solid reaction products were separated by suction filtration. The obtained solid reaction product was vacuum-dried at 120°C for 2 h to obtain nanoporous silicon particles.

### <Preparation of electrode active material composite particle>

### (Reference Example)

The above nanoporous silicon particles, PVDF-HFP (manufactured by Kureha Corporation) as a binder, and carbon black (CB) as a conductive material were dispersed in a ratio (mass ratio) of silicon particles : binder : CB = 100:13.3:20 in dimethyl carbonate (Nacalai Tesque, Inc.) to obtain a slurry. The slurry was sprayed for drying into a spray dryer having a nitrogen gas atmosphere under the condition of 140°C. As a result, electrode active material composite particles of Reference Example were obtained.

### (Example 1)

The above nanoporous silicon particles, PVDF-HFP (manufactured by Kureha Corporation) as a binder, and carbon nanotube (CNT) (fiber diameter: about 10 nm) as a fibrous conductive material were dispersed in a ratio (mass ratio) of silicon particles : binder : CNT = 100:13.3:0.4 in dimethyl carbonate (Nacalai Tesque, Inc.) to obtain a slurry. The slurry was sprayed for drying into a spray dryer having a nitrogen gas atmosphere under the condition of 140°C. As a result, electrode active material composite particles of Example 1 were obtained.

### (Example 2)

The above nanoporous silicon particles, PVDF-HFP (manufactured by Kureha Corporation) as a binder, and vapor-grown carbon fiber (VGCF) (fiber diameter: 150 nm) as a fibrous conductive material were dispersed in a ratio (mass ratio) of silicon particles : binder : VGCF = 100:13.3:8 in dimethyl carbonate (Nacalai Tesque, Inc.) to obtain a slurry. The slurry was sprayed for drying into a spray dryer having a nitrogen gas atmosphere under the condition of 140°C. As a result, electrode active material composite particles of Example 2 were obtained.

### (Comparative Example 1)

The above nanoporous silicon particles and PVDF-HFP (manufactured by Kureha Corporation) as a binder were dispersed in a ratio (mass ratio) of silicon particles : binder = 100:13.3 in dimethyl carbonate (Nacalai Tesque, Inc.) to obtain a slurry. The slurry was sprayed for drying into a spray dryer having a nitrogen gas atmosphere under the condition of 140°C. As a result, electrode active material composite particles of Comparative Example 1 were obtained.

### (Preparation of solid electrolyte)

0.550 g of lithium sulfide (Li2S) (manufactured by Furuchi Chemical Corporation), 0.887 g of phosphorus pentasulfide (P₂S₅) (manufactured by Sigma-Aldrich), 0.285 g of lithium iodide (LiI) (manufactured by Nippoh Chemicals Co., Ltd.), and 0.277 g of lithium bromide (LiBr) (manufactured by Japan Pure Chemical Co., Ltd.) were mixed in an agate mortar for 5 min. 4 g of n-heptane (dehydration grade, manufactured by Kanto Chemical Co., Inc.) was added to the obtained mixture and mechanical milling was carried out for 40 h using a planetary ball mill to obtain a solid electrolyte.

### (Production of evaluation cell)

Lithium nickel-cobalt-manganese oxide (LiNi_{1/3}Co_{1/3}Mn_{1/3}O₂) (manufactured by Nichia Corporation) was surface-treated with lithium niobate (LiNbO3) to obtain a positive active material. 1.5 g of the positive active material, 0.023 g of a conductive aid (VGCF, manufactured by Showa Denko K.K.), 0.239 g of the above solid electrolyte, 0.011 g of a binder (PVdF, manufactured by Kureha Corporation), and 0.8 g of butyl butyrate (manufactured by Kishida Chemical Co., Ltd.) were mixed using an ultrasonic homogenizer (UH-50, manufactured by SMT Co., Ltd.) to obtain a positive electrode mixture.

1.0 g of electrode active material composite particles from each of the above Examples, 0.04 g of a conductive aid (VGCF, manufactured by Showa Denko, K.K.), 0.776 g of the above solid electrolyte, 0.02 g of a binder (PVdF, manufactured by Kureha Corporation), and 1.7 g of butyl butyrate (manufactured by Kishida Chemical Co., Ltd.) were mixed using an ultrasonic homogenizer (UH-50, manufactured by SMT Co., Ltd.) to obtain a negative electrode mixture.

0.065 g of the above solid electrolyte was placed in a 1 cm² ceramic mold and pressed at 1 ton/cm² to produce a solid electrolyte layer. On one side thereof, 0.018 g of the above positive electrode mixture was placed and pressed at 1 ton/cm² to produce a positive electrode active material layer. On the opposite side from the positive electrode active material layer, 0.0054 g of the above negative electrode mixture was placed and pressed at 4 ton/cm² to produce a negative electrode active material layer. An aluminum foil was used as a positive electrode current collector, and a copper foil as a negative electrode current collector. As a result, an all-solid-state battery as an evaluation cell was produced.

### <Evaluation>

### (Microscope observation)

Cross-sectional structures of the electrode active material composite particles obtained in Reference Example and Examples 1 and 2 were observed with scanning electron microscope (SEM) and by scanning electron microscope-energy dispersive X-ray spectroscopy (SEM-EDX).

### (Restraining pressure increase amount)

The obtained evaluation cell was subjected to CC/CV charging to 4.55 V at 0.245 mA and then CC/CV discharging to 3.0 V at 0.245 mA. In the initial charging, restraining pressure on the cell was monitored and the restraining pressure at 4.55 V was measured. The restraining pressure increase amount was used as an index of size of expansion. Relative evaluation was carried out with the restraining pressure in Comparative Example 1 set at 1.00.

### <Results>

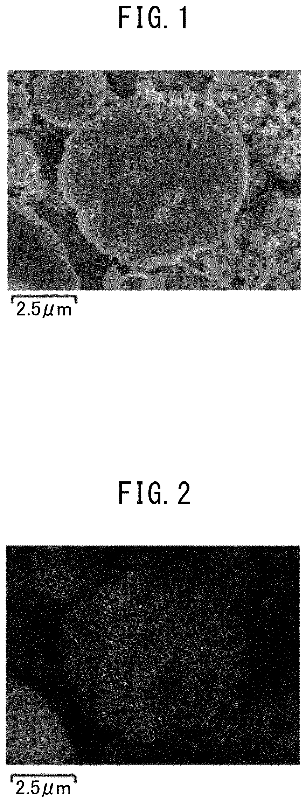

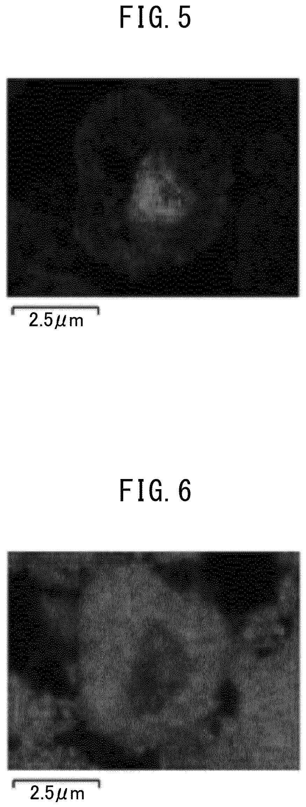

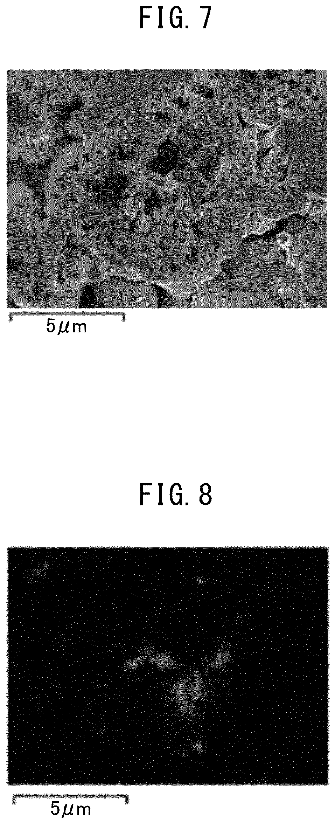

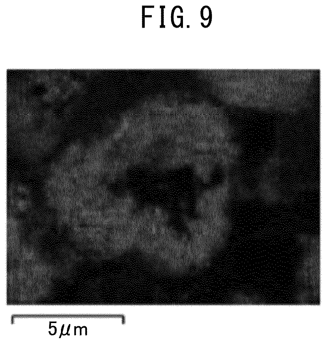

Images of electrode active material composite particles of the Examples observed by SEM are shown in FIGS. 1, 4, and 7. Images of cross-sectional structures of the electrode active material composite particles of the Examples observed by SEM-EDX are shown in FIGS. 2, 3, 5, 6, 8, and 9. Further, the results of restraining pressure increase amounts of all-solid-state batteries produced using the electrode active material composite particles of the Examples are shown in Table 1.

**[Table 1]**

| | Conductive material | | | Restraining pressure increase amount (relative value) |
|---|---|---|---|---|
| | Type | Shape | Fiber diameter [nm] | |
| Reference Example | CB | particulate | - | 0.93 |
| Example 1 | CNT | fibrous | 10 | 0.68 |
| Example 2 | VGCF | fibrous | 150 | 0.87 |
| Comparative Example 1 | - | - | - | 1.00 |

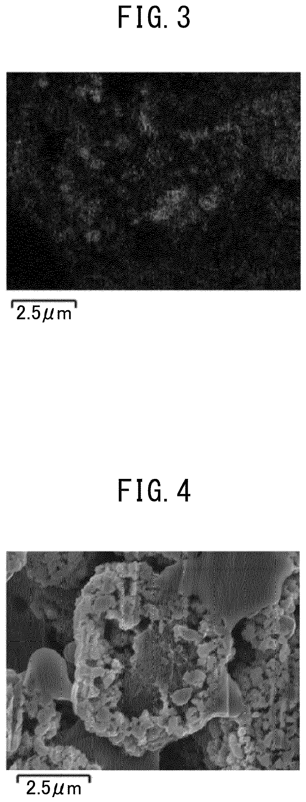

As shown in FIGS. 1 to 3, in the electrode active material composite particles of Reference Example, in which the conductive material was particulate, the silicon particles and the conductive material were uniformly dispersed. In contrast, as shown in FIGS 4 to 6 and FIGS. 7 to 9, in the electrode active material composite particles of the Examples, in which the conductive material was fibrous, the conductive material was localized inside the electrode active material composite particles.

As shown in Table 1, the cells of Examples 1 and 2 had smaller restraining pressure increase amounts, i.e., expansions, than the cell of Comparative Example 1. Particularly, in the cell of Example 1 in which the fiber diameter of the fibrous conductive material was smaller, the expansion was the smallest.

## Claims

1. An electrode active material composite particle, comprising a silicon particle and a fibrous conductive material, wherein
the fibrous conductive material is localized inside the electrode active material composite particle.

2. The electrode active material composite particle according to claim 1, wherein a fiber diameter of the fibrous conductive material is 1000 nm or less.

3. The electrode active material composite particle according to claim 1, wherein the fibrous conductive material is fibrous carbon.

4. The electrode active material composite particle according to claim 1, further comprising a binder.

5. A solid-state battery, comprising an electrode active material layer, wherein
the electrode active material layer contains the electrode active material composite particle according to any one of claims 1 to 4.

6. A method for manufacturing an electrode active material composite particle, comprising spray-drying a slurry comprising silicon particles and a fibrous conductive material.

7. The method according to claim 6, wherein a fiber diameter of the fibrous conductive material is 1000 nm or less.

8. The method according to claim 6, wherein the fibrous conductive material is fibrous carbon.

9. The method according to claim 6, wherein the slurry further comprises a binder.

10. A method for manufacturing a solid-state battery, comprising
manufacturing electrode active material composite particles by the method according to any one of claims 6 to 9, and
forming an electrode active material layer containing the electrode active material composite particles.
